# EUROPÄISCHE PATENTSCHRIFT

(11) **EP 3 759 330 B1**
(45) Veröffentlichungstag und Bekanntmachung des Hinweises auf die Patenterteilung: **23.03.2022**
(21) Anmeldenummer: 19726912.9
(22) Anmeldetag: 06.05.2019
(51) Int. Cl.: F02C 1/04, F02C 3/10, F02C 6/18, F02C 3/30, F02C 7/143, F02C 7/224

(54) **ERWEITERTER GASTURBINENPROZESS MIT EXPANDER**
EXTENDED GAS TURBINE PROCESS HAVING AN EXPANDER
PROCESSUS DE TURBINE À GAZ ÉTENDU AVEC UN DISPOSITIF D'EXPANSION

(30) Priorität: 22.05.2018 DE 102018207961
(43) Veröffentlichungstag der Anmeldung: 06.01.2021
(73) Patentinhaber: Siemens Energy Global GmbH & Co. KG, 81739 München (DE)
(72) Erfinder: GRAEBER, Carsten, 91056 Erlangen (DE); JURETZEK, Uwe, 91058 Erlangen (DE)
(86) Internationale Anmeldenummer: PCT/EP2019/061483
(87) Internationale Veröffentlichungsnummer: WO 2019/223985

(56) Entgegenhaltungen:
- EP-A1- 1 286 030
- WO-A1-2007/141101
- GB-A- 2 357 552
- US-A- 2 172 708
- US-A- 5 347 806

## Beschreibung

Die Erfindung betrifft eine Kraftwerksanlage sowie ein Verfahren zu deren Betrieb.

Aufgrund sich ändernder Marktanforderungen in vielen Ländern scheint eine Maximierung der Anlagenwirkungsgrade zukünftig nicht ausschließlich erfolgsversprechend zu sein. Bei Betrachtung der Vorgaben für den deutschen oder europäischen Markt kann davon ausgegangen werden, dass durch den verstärkten Ausbau der regenerativen Energieerzeugung die konventionellen Kraftwerke deutlich weniger Betriebsstunden vorweisen werden und damit ein enormer Kostendruck beim Bau von neuen Kraftwerken zu erwarten ist.

Eine Verringerung der Anlagenkomplexität mit einer damit verbundenen Kostenreduzierung und zusätzlich eine verbesserte Schnellstartfähigkeit gerade aus dem kalten Zustand scheinen in diesem Zusammenhang ein durchaus vielversprechender Ansatz zu sein, auch wenn daraus eine Verschlechterung des Anlagenwirkungsgrades resultiert.

Bisher gibt es noch keine wirklich überzeugenden Antworten auf die zuvor genannte Problemstellung. Zwar gibt es mit Gasmotor basierten Kraftwerken eine Alternative, die insbesondere Schnellstartfähigkeit sicherstellt, allerdings sind die Investitionskosten für eine solche Anlage gegenüber den bisher oft präferierten Gas- und Dampf(GuD)-Kraftwerken vergleichsweise hoch, hinzukommt auch noch ein deutlich niedrigerer Wirkungsgrad.

Eine Verringerung der Anlagenkomplexität kann bei GuD-Anlagen erreicht werden, indem auf den uD-Teil, also den Dampfturbinenteil, des Kraftwerks verzichtet wird. Ein einfacher Gasturbinen-Prozess ohne Dampfkreislauf führt allerdings zu einer drastischen und wirtschaftlich nicht darstellbaren Verschlechterung des Prozesses.

Die US 2,172,708 offenbart daher einen Prozess, bei dem Luft verdichtet wird und die verdichtete Luft weiter erwärmt wird, bevor sie zuerst entspannt und dann einer Verbrennung zugeführt wird, wobei die weitere Erwärmung der Luft im Wärmetausch mit Abgasen erfolgt, die unmittelbar aus der Verbrennung folgen.

Die WO 2007/141101 A1 offenbart eine weitere Möglichkeit der Nutzung der Wärme des Abgases aus einer ersten Verbrennung, bei der dieses Abgas nach der Entspannung in einer ersten Turbine einer zweiten Brennkammer zugeführt wird.

Ein rekuperierter Joule-Prozess mit einer zwischengekühlten Verdichtung ergibt bei einer optimalen Gestaltung des Prozesses verglichen mit dem GuD-Referenzprozess einen moderaten Wirkungsgradabfall. Die Komplexität wird drastisch reduziert, so dass eine signifikante Kostenreduzierung möglich erscheint. Es wird erwartet, dass sich die Wirtschaftlichkeit dieses Konzepts bei zukünftigen Marktanforderungen deutlich positiv absetzt gegenüber den aktuellen GuD-Konzepten, wie auch gegenüber Gasmotorkraftwerken. Diese verbesserte Wirtschaftlichkeit ist auch dadurch begründet, dass der erweiterte Gasturbinenprozess eine dem einfachen Gasturbinenprozess ähnliche Startzeit aufweist und somit deutlich schneller als ein GuD-Prozess ist. Hinzu kommt, dass es für die Startzeit und für die Komponentenlebensdauer bei entsprechender Auslegung unerheblich ist, ob dem Start ein längerer Stillstand mit entsprechendem Auskühlen der Anlagenkomponenten vorausgegangen ist. Gerade nach längeren Stillständen (Kaltstartbedingungen) spielt der erweiterte Gasturbinenprozess gegenüber dem GuD-Prozess seine besonders gute Schnellstartfähigkeit vorteilhaft aus. Weiterhin wird erwartet, dass sich bezüglich des Teillastverhaltens Verbesserungen hinsichtlich Wirkungsgrad und Laständerungsgeschwindigkeiten ergeben.

Aufgabe der Erfindung ist es, Kraftwerksanlagen mit dem beschriebenen erweiterten Gasturbinenprozess weiter zu verbessern. Eine weitere Aufgabe der Erfindung ist es, ein entsprechend verbessertes Verfahren zum Betrieb einer solchen Kraftwerksanlage anzugeben.

Die Erfindung löst die auf eine Kraftwerksanlage gerichtete Aufgabe mit einer Kraftwerksanlage nach Anspruch 1, indem sie vorsieht, dass bei einer derartigen Kraftwerksanlage mit einem Verdichter, einer Brennkammer und einer Turbine, die Kraftwerksanlage weiter umfassend eine Verdichterluftleitung, die den Verdichter mit der Brennkammer verbindet, und einen in die Verdichterluftleitung und in eine von der Turbine abzweigende Abgasleitung geschalteten ersten Wärmeübertrager, ein erster Expander zwischen erstem Wärmeübertrager und Brennkammer in der Verdichterluftleitung angeordnet ist und dass der erste Expander und der Verdichter auf einer gemeinsamen Welle angeordnet sind. Dabei kann "auf einer gemeinsamen Welle angeordnet" auch bedeuten, dass Expander und Verdichter zumindest über ein gemeinsames Getriebe koppelbar sind.

Für den erweiterten Gasturbinenprozess ist von wesentlicher Bedeutung, dass das Einbinden der rekuperierten Wärme durch die maximal zulässige Lufttemperatur vor dem Eintritt in die Brennkammersektion begrenzt wird. Das führt zu einer Verschlechterung des Prozesswirkungsgrades. Der vorgeschlagene erweiterte Gasturbinenprozess mit Expander setzt genau hier an. Um eine maximale Rekuperation bei voller Feuerungstemperatur und damit Gasturbinen-Leistung zu erreichen, wird bei einer freien Auslegung des vorgeschalteten Verdichters der Austrittsdruck höher gewählt als der erforderliche Turbineneintrittsdruck (bestimmt durch die Produktreihe). Das dadurch verfügbare Druckgefälle wird für eine zusätzliche Expansion auf der Luftseite vor der Verbrennung genutzt. Dabei kann die Druckluft im Rekuperator mittels des Abgasstroms auf die maximal zulässige Austrittstemperatur vorgewärmt werden und anschließend dem ersten Expander zugeführt werden. Durch die Expansion auf das Turbinendruckniveau wird die Temperatur auf den maximal zulässigen Wert der Brennkammersektion abgesenkt bei gleichzeitiger, zusätzlicher Leistungsabgabe. Eine noch vorhandene Antriebswelle des Verdichters kann für die Kopplung mit dem ersten Expander genutzt werden.

In einer vorteilhaften Ausführungsform ist der Verdichter ein mehrstufig zwischengekühlter Verdichter, beim dem zwischen Verdichterstufen zweite Wärmeübertrager als Verdichterzwischenkühlung angeordnet sind. Damit kann der Arbeitsaufwand für die Verdichtung verringert werden.

Durch diese Veränderungen gegenüber dem erweiterten Gasturbinenprozess ergeben sich folgende Vorteile:
1.) eine maximale Rekuperation verbunden mit einem maximalen Prozesswirkungsgrad (+1,5%-Pkt. gegenüber dem erweiterten Gasturbinenprozess) und eine maximale Leistung von 4 - 7% gegenüber dem erweiterten Gasturbinenprozess,
2.) eine flexible Anpassung an die vorhandenen Gasturbinen-Produktreihen und
3.) eine einfache Integration des ersten Expanders durch die mechanische Anbindung an einen Getriebeverdichter mit optimaler Drehzahl.

Diesen Verbesserungen stehen nur moderat zu erwartenden Mehrkosten für die Heißluftturbine und die verbindenden Rohrleitungen gegenüber. Die Betriebsflexibilität sollte nicht beeinträchtigt werden.

Ferner ist es vorteilhaft, wenn der erste Wärmeübertrager zwei Wärmeübertragermodule umfasst, die beide hintereinander jeweils in Verdichterluftleitung und Abgasleitung angeordnet sind, wobei zwischen den Wärmeübertragermodulen eine Wassereinspritzung in der Verdichterluftleitung angeordnet ist. Das ist vorteilhaft für die Menge der übertragbaren Wärme als auch für die nachfolgende Verbrennung.

In einer vorteilhaften Ausführungsform der Erfindung sind die zweiten Wärmeübertrager, die zwischen den Verdichterstufen angeordnet sind, in einen Fernwärmekreislauf geschaltet. Auf diese Weise kann eine Zwischenkühlung der verdichteten Luft erfolgen und gleichzeitig Wasser für einen Fernwärmekreislauf wieder erwärmt werden.

Es ist zweckmäßig, wenn für eine Brennstoffvorwärmung zwischen den Wärmeübertragermodulen ein dritter Wärmeübertrager in der Abgasleitung angeordnet ist. Bei der Brennstoffvorwärmung wird die fühlbare Wärme des Brennstoffes erhöht und somit die erforderliche Brennstoffmenge verringert.

Ferner ist es zweckmäßig, wenn ein vierter Wärmeübertrager in einer Luftzuleitung zum Verdichter angeordnet ist und in einen Kühlkreislauf der Kraftwerksanlage geschaltet ist. Durch die Anordnung des vierten Wärmeübertragers in der Luftzuleitung kann bereits vor der Verdichtung der Luft diese auf ein vergleichsweise hohes Temperaturniveau gebracht werden, was für die anschließende Wärmenutzung günstig ist.

In einer zur Kraftwerksanlage mit Wärmeeinbindung ins Fernwärmenetz alternativen Ausführungsform der Erfindung umfasst die Kraftwerksanlage ferner eine thermisch angetriebene Kältemaschine, die mit ihrer Wärmeeingangsseite über einen Dampferzeuger mit der Abgasleitung und mit einem Rücklauf der Verdichterzwischenkühlung verbunden ist und mit ihrer Kälteausgangsseite mit einem Zulauf zumindest eines Teils der Verdichterzwischenkühlung verbunden ist. Diese Variante hat den großen Vorteil einer verbesserten Zwischenkühlung der verdichteten Luft.

Dabei ist es zweckmäßig, wenn die Kältemaschine mindestens eine Dampfstrahldüse umfasst. Aufgrund des Fehlens beweglicher Teile und eines Antriebs sind diese Dampfstrahlkältemaschinen besonders einfach und robust und üblicherweise auch kostengünstiger als andere Kältesysteme.

Dabei ist es besonders vorteilhaft, wenn die Kältemaschine zwei Dampfstrahldüsen umfasst, deren Gemischstromauslässe zusammengeführt sind, und die so miteinander verschaltet sind, dass Entspanner (flash evaporator) den jeweiligen Sauganschlüssen der Dampfstrahldüsen vorgeschaltet sind und ein Wasserauslass des einen Entspanners mit einem Wassereinlass des anderen Entspanners verbunden ist. Auf diese Weise lässt sich eine besonders gute Abkühlung des verwendeten Wassers erreichen und somit auch eine entsprechend gute Kühlung der verdichteten Luft.

In einer vorteilhaften Ausführungsform der Kraftwerksanlage ist ein achter Wärmeübertrager in Strömungsrichtung eines Abgases nach den Wärmeübertragermodulen des ersten Wärmeübertragers in die Abgasleitung geschaltet und eingangsseitig in den Rücklauf der Verdichterzwischenkühlung und ausgangsseitig in einen der Entspanner 29 geschaltet. Hierdurch kann die Restwärme des Abgases für eine thermisch angetriebene Kältemaschine verwendet werden.

In einer weiteren vorteilhaften Kraftwerksanlage ist ein achter Wärmeübertrager zwischen die Wärmeübertragermodule des ersten Wärmeübertragers in die Abgasleitung geschaltet und eingangsseitig in den Rücklauf der Verdichterzwischenkühlung und einen Rücklauf des Entspanners, in den er auch ausgangsseitig geschaltet ist. Mit einer solchen Anordnung des achten Wärmeübertragers ist ein höheres Dampfdruckniveau möglich als bei einer stromabliegenden Anordnung in der Abgasleitung, was zu einer gesteigerten Effizienz der Dampfstrahlkältemaschine (thermisch betriebene Kältemaschine) führt. Zudem ergibt sich ein besseres Teillastverhalten der Druckluftaustrittstemperatur aus der Hochtemperatur-Rekuperation durch eine zwischengeschaltete externe Wärmeübertragung.

Schließlich ist es vorteilhaft, wenn ein weiterer, zweiter Expander stromab des ersten Expanders angeordnet ist und eingangsseitig mit der Verdichterluftleitung an einer Position hinter dem ersten Expander verbunden ist und ausgangsseitig in die Abgasleitung mündet. Damit ergibt sich ein verbesserter Wirkungsgrad der Kraftwerksanlage. Insbesondere kann somit ein maximales Wirkungsgradpotential für einen "trockenen"

Prozess, d.h. ohne Wasser-Dampf-Kreislauf, ausgeschöpft werden. Die Turbinenauslegung des zweiten Expanders kann für Temperaturen am Lufteintritt unter 480°C erfolgen, da die Schaltung als Reihenschaltung konzipiert ist, d.h. der zweite Expander ist nicht parallel, sondern in Reihe hinter den ersten Expander geschaltet. Schließlich ergibt sich ein kostengünstiges Design durch die Anbindung des zweiten Expanders via Getriebe an den Luftverdichter (wie schon beim ersten Expander).

Die auf ein Verfahren gerichtete Aufgabe wird gelöst durch ein Verfahren gemäß Anspruch 13 zum Betreiben einer Kraftwerksanlage mit einem Verdichter, einer Brennkammer und einer Turbine, bei dem ein Austrittsdruck des Verdichters höher gewählt wird, als ein erforderlicher Turbineneintrittsdruck und bei dem die Verdichterluft vor der Verbrennung expandiert wird und dabei zum Antrieb des Verdichters genutzt wird, im Gegensatz zu sogenannten Compressed Air Energy Storage-Anlagen, bei denen zwar auch Luft verdichtet und wieder expandiert wird, wobei die beiden Vorgänge dort zeitlich entkoppelt sind und entsprechende Druckluftspeicher dazwischengeschaltet sind. Bei der vorliegenden Erfindung wird die verdichtete Luft nicht für eine spätere Nutzung zwischengespeichert, sondern unmittelbar nach der Verdichtung in einem Gasturbinenprozess verwendet.

Die Verdichterluft wird in einem Wärmetausch mit einem Abgas der Kraftwerksanlage auf eine materialtechnisch maximal zulässige Austrittstemperatur vorgewärmt, bevor sie expandiert wird, so dass die Expanderaustrittsluft für den Brennkammereintritt nicht zu heiß wird. Weiterhin ist es vorteilhaft, wenn die Verdichterluft durch Expansion auf ein Turbinendruckniveau und eine für die Brennkammer maximal zulässige Temperatur abgesenkt wird. Somit ergibt sich eine Nutzung der überschüssigen Energie in der verdichteten Luft bei gleichzeitig optimaler Einstellung der Luft-Parameter für die Verbrennung.

Ferner ist es vorteilhaft, wenn Abwärme vom Abgas und aus der Verdichterzwischenkühlung zum Antrieb einer wärmenutzenden Kältemaschine zwecks verbesserter Zwischenkühlung des Verdichters genutzt wird.

Insbesondere ist es vorteilhaft, wenn Wasser im Wärmetausch mit Abgas und verdichteter Luft erwärmt und anschließend zumindest teilweise verdampft wird und weiterhin Wasser dadurch gekühlt wird, dass mindestens einem Entspanner, in dem erwärmtes Wasser verdampft wird, mindestens eine Dampfstrahldüse zum Absaugen des Dampfes zugeschaltet ist, wobei das bei der Verdampfung gekühlte Wasser zumindest einem Teil einer Verdichterzwischenkühlung zugeführt wird.

Die Erfindung wird beispielhaft anhand der Zeichnungen näher erläutert. Es zeigen schematisch und nicht maßstäblich:
- Figur 1: einen erweiterten Gasturbinenprozess nach dem Stand der Technik,
- Figur 2: einen erweiterten Gasturbinenprozess mit einem ersten Expander nach der Erfindung,
- Figur 3: einen erweiterten Gasturbinenprozess mit einstufigem Niederdruckdampf, Dampfstrahldüse und Einspritzkondensator,
- Figur 4: einen erweiterten Gasturbinenprozess mit gegenüber dem Ausführungsbeispiel der Figur 3 verändert positionierten Wärmetauscher für eine thermisch angetriebene Kältemaschine,
- Figur 5: einen erweiterten Gasturbinenprozess mit zweistufigem Niederdruckdampf und Einspritzkondensator,
- Figur 6: einen erweiterten Gasturbinenprozess mit zweistufigem Niederdruckdampf und Niederdruckverdampfer,
- Figur 7: einen erweiterten Gasturbinenprozess wie in Figur 4 mit Oberflächenkondensator anstelle eines Einspritzkondensators und
- Figur 8: einen erweiterten Gasturbinenprozess mit einem zweiten Expander.

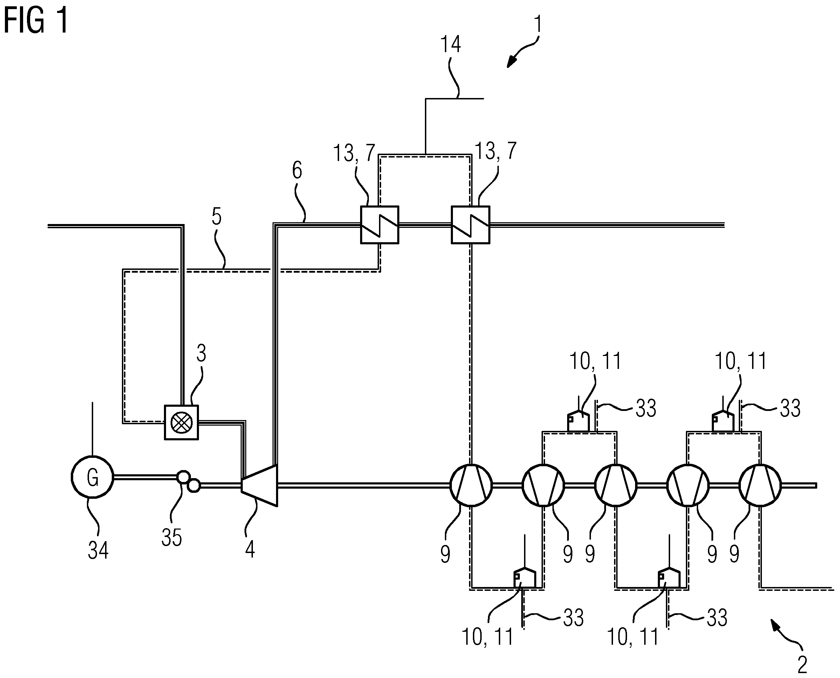

Die Figur 1 zeigt schematisch und beispielhaft einen erweiterten Gasturbinenprozess nach dem Stand der Technik. Die Kraftwerksanlage 1 umfasst einen Verdichter 2, eine Brennkammer 3 und eine Turbine 4. Eine Verdichterluftleitung 5 verbindet den Verdichter 2 mit der Brennkammer 3. Ein erster Wärmeübertrager 7 ist in die Verdichterluftleitung 5 und in eine von der Turbine 4 abzweigende Abgasleitung 6 geschaltet. In der Figur 1 umfasst der erste Wärmeübertrager 7 zwei Wärmeübertragermodule 13, die beide hintereinander jeweils in Verdichterluftleitung 5 und Abgasleitung 6 angeordnet sind, wobei zwischen den Wärmeübertragermodulen 13 eine Wassereinspritzung 14 in der Verdichterluftleitung 5 angeordnet ist.

Der Verdichter 2 ist ein mehrstufig zwischengekühlter Verdichter 2, beim dem zwischen Verdichterstufen 9 zweite Wärmeübertrager 10 als Verdichterzwischenkühlung 11 angeordnet sind.

Ferner weist der Verdichter 2 zwischen den Verdichterstufen 9 Anzapfungen 33 für eine Kühlung von Brennkammer 3 und/oder Turbine 4 auf.

Schließlich umfasst die Kraftwerksanlage 1 der Figur 1 einen Generator 34, der über ein Getriebe 35 mit der Turbine 4 verbunden ist.

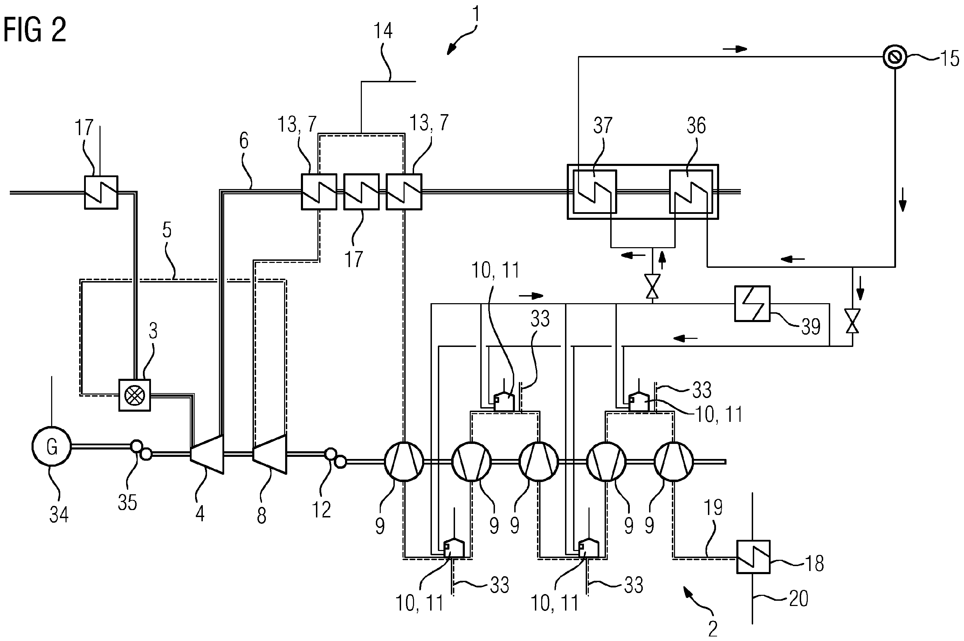

Figur 2 zeigt einen erweiterten Gasturbinenprozess mit einem ersten Expander 8 nach der Erfindung. Der erste Expander 8 ist zwischen erstem Wärmeübertrager 7 und Brennkammer 3 in der Verdichterluftleitung 5 angeordnet und mit dem Verdichter 2 über ein gemeinsames Getriebe 12 koppelbar.

Zur besseren Nutzung der bei der Verdichtung entstehenden Wärme sind die zweiten Wärmeübertrager 10 in einen Fernwärmekreislauf 15 geschaltet. Die Bereitstellung von Wärme für den Fernwärmekreislauf 15 geschieht folgendermaßen. Der kalte Rücklaufwasserstrom aus dem Fernwärmekreislauf 15 wird aufgeteilt. Ein erster Teilstrom wird den zweiten Wärmeübertragern 10 für die Zwischenkühlung 11 des Verdichters 2 zugeführt und ein zweiter Teilstrom wird einem fünften Wärmeübertrager 36 zugeführt, der in der Abgasleitung 6 angeordnet ist. Nach Erwärmung werden die beiden Teilströme zusammen- und einem sechsten Wärmeübertrager 37 zugeführt, der ebenfalls in der Abgasleitung 6 in Strömungsrichtung des Abgases stromauf des fünften Wärmeübertragers 36 angeordnet ist. Der dort weiter erwärmte Wasserstrom wird dem Fernwärmekreislauf 15 wieder zugeführt.

Wenn keine Fernwärme benötigt wird, wird die bei der Verdichtung entstehende Wärme an die Umgebung beispielsweise über eine FinFan-Kühlung oder auch einen Kühlturm abgegeben. Zu diesem Zweck ist in der Kraftwerksanlage 1 der Figur 2 eine Bypassleitung mit einem siebten Wärmeübertrager 39 vorgesehen.

Die Figur 2 zeigt ferner für eine Brennstoffvorwärmung einen dritten Wärmeübertrager 17, der zwischen den Wärmeübertragermodulen 13 in der Abgasleitung 6 angeordnet ist.

Schließlich ist noch ein vierter Wärmeübertrager 18 in einer Luftzuleitung 19 zum Verdichter 2 angeordnet und in einen Kühlkreislauf 20 der Kraftwerksanlage 1 geschaltet.

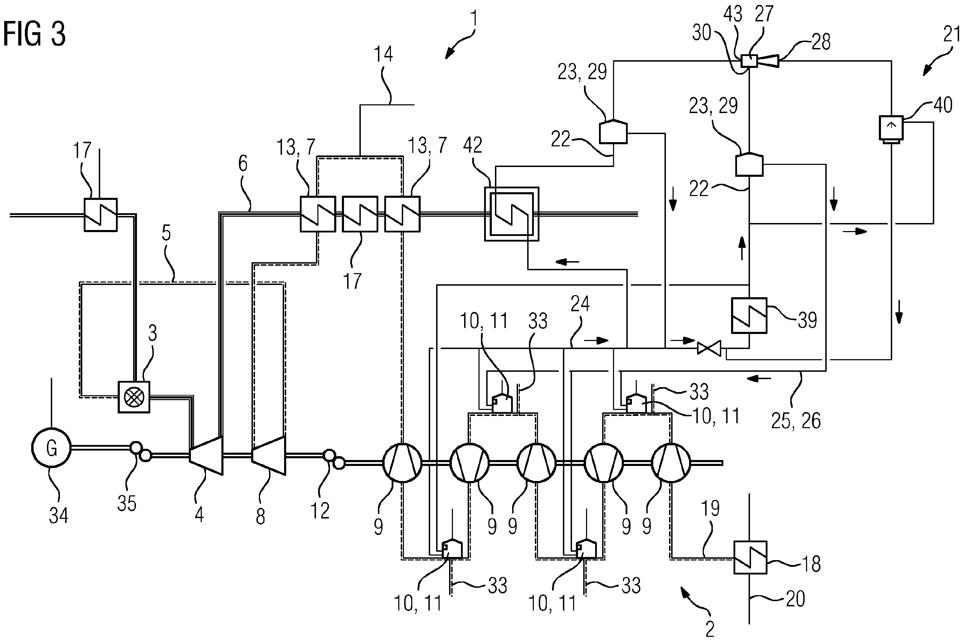

Die Ausführungsform der Figur 3 umfasst eine thermisch angetriebene Kältemaschine 21, die mit ihrer Eingangsseite 22 über einen achten Wärmeübertrager 42 mit der Abgasleitung 6 und mit einem Rücklauf 24 der Verdichterzwischenkühlung 11 verbunden ist.

Ein Wasserstrom aus dem Rücklauf 24 der Verdichterzwischenkühlung 11 wird geteilt. Ein erster Teilstrom durchläuft den Wärmeübertrager 42 und nimmt Wärme aus der Abgasleitung 6 auf. Nach Erwärmung wird er einem Entspanner 29 (flash evaporator) zugeführt wobei der entstehende Dampf dem Treibmittelanschluss 43 einer Dampfstrahldüse 27 zugeführt wird, während zurückbleibendes Wasser einem zweiten Teilstrom des Wassers aus dem Rücklauf 24 der Verdichterzwischenkühlung 11 zugeführt wird. Dieser wieder vereinte Strom wird nach Kühlung im siebten Wärmeübertrager 39 wieder aufgeteilt, wobei ein erster Teilstrom die der letzten Verdichterstufe 9 zugeführte Luft kühlt und ein zweiter Teilstrom einem Entspanner 29 (flash evaporator) zugeführt wird. Entstehender Dampf wird einem Sauganschluss 30 der Dampfstrahldüse 27 zugeführt, zurückbleibendes Wasser wird dem Zulauf der Verdichterzwischenkühlung 11 zugeführt, die bis auf die letzte Verdichterstufe 9 alle übrigen Verdichterstufen 9 mit Kühlwasser versorgt.

Der aus dem Gemischstromauslass der Dampfstrahldüse 27 austretende Dampf wird einem Einspritzkondensator 40 mit Einspritzkühlung zugeführt. Das entstehende Kondensat wird dem aus der Verdichterkühlung 11 kommenden Wasserstrom vor dem siebten Wärmeübertrager 39 zugemischt. Das für den Einspritzkondensator 40 benötige Wasser wird der Leitung hinter dem siebten Wärmeübertrager 39 entnommen.

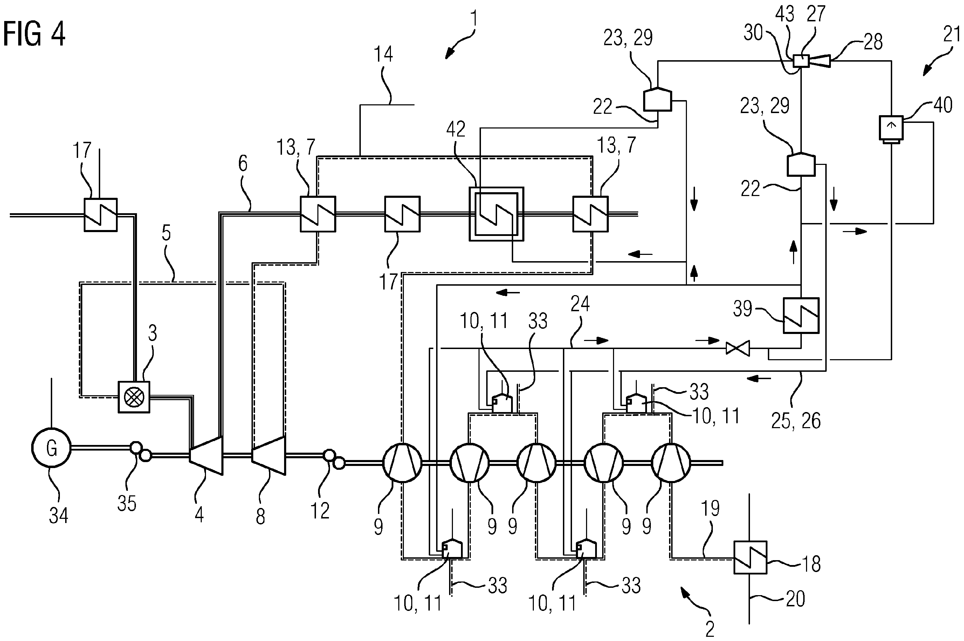

Figur 4 zeigt ein Ausführungsbeispiel, bei dem gegenüber dem Ausführungsbeispiel der Figur 3 der Wärmeübertrager 42 hinsichtlich seiner Anordnung in der Abgasleitung 6 nach oben verschoben ist, zwischen die Wärmeträgermodule 13. Durch die im Vergleich zur Ausführungsform der Figur 3 höhere Abgastemperatur an dieser Stelle ist ein höheres Dampfdruckniveau möglich und damit eine gesteigerte Effizienz der thermisch betriebenen Dampfstahlkältemaschine. Ferner ergibt sich ein besseres Teillastregelverhalten der Druckluftaustrittstemperatur aus der Hochtemperatur-Rekuperation durch die zwischengeschaltete externe Wärmeübertragung.

Der Kühlprozess muss nicht unbedingt mit dem Dampfstrahl durchgeführt werden. Absorptions- oder Adsorptionsprozesse sind ebenfalls möglich.

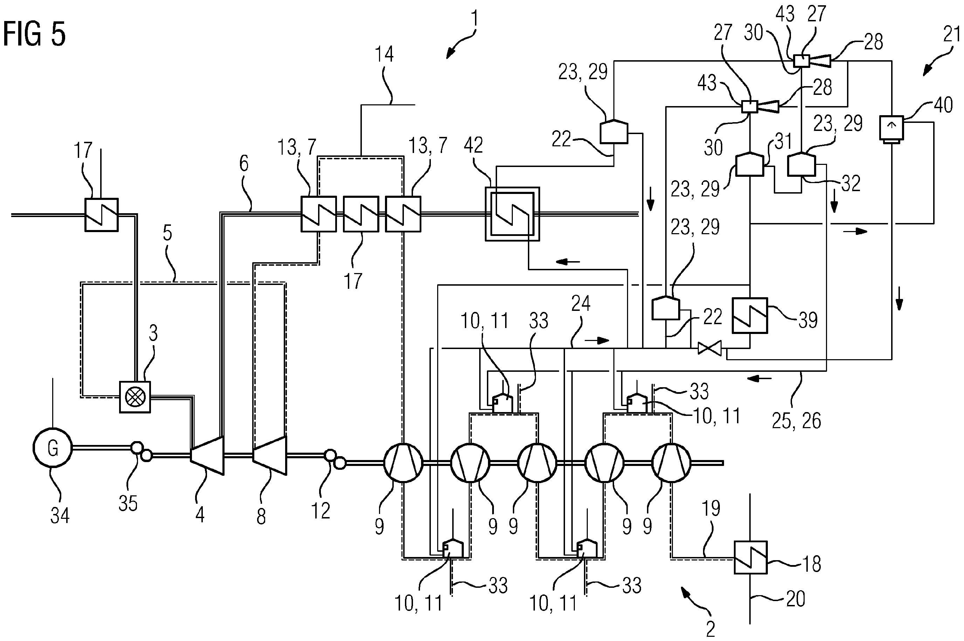

Figur 5 zeigt einen erweiterten Gasturbinenprozess mit zweistufigem Niederdruckdampf und Einspritzkondensator. Dabei umfasst die Kältemaschine 21 zwei Dampfstrahldüsen 27, deren Gemischstromauslässe 28 zusammengeführt sind, und die so miteinander verschaltet sind, dass Entspanner 29 den jeweiligen Sauganschlüssen 30 der Dampfstrahldüsen 27 vorgeschaltet sind und ein Wasserauslass 31 des einen Entspanners 29 mit einem Wassereinlass 32 des anderen Entspanners 29 verbunden ist. Auf diese Weise lässt sich eine stärkere Abkühlung des Wassers für die Verdichterzwischenkühlung 11 erreichen als im Ausführungsbeispiel der Figur 3.

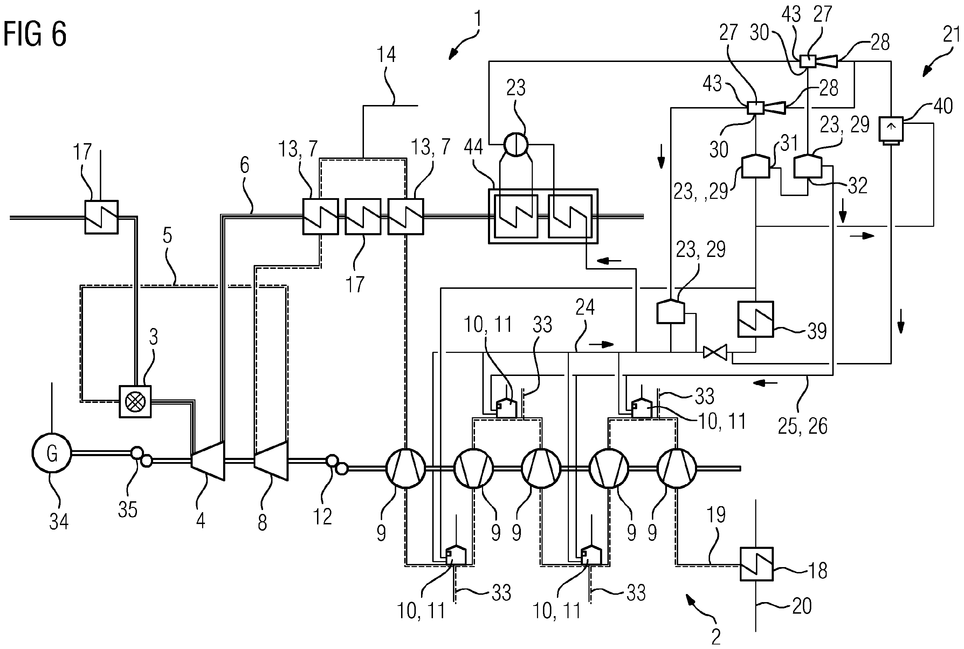

Figur 6 zeigt eine weitere Variante, bei der Dampf, zumindest zum Teil, nicht in einem Entspanner 29 entsteht, sondern bei der ein Niederdruckverdampfer 44 in der Abgasleitung 6 angeordnet ist.

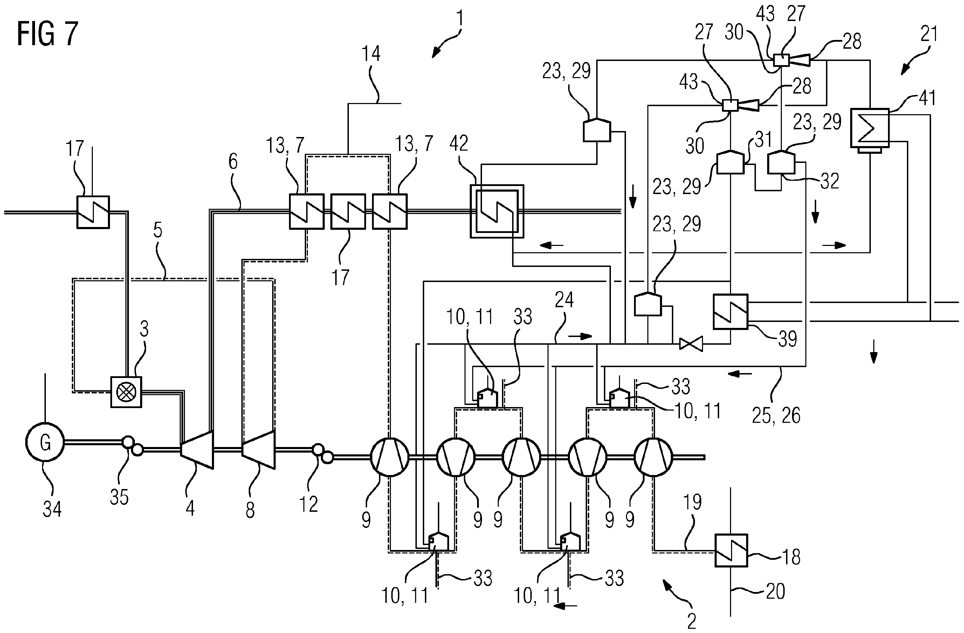

Figur 7 schließlich zeigt als Alternative zum Einspritzkondensator 40 der Figur 4 einen Oberflächenkondensator 41. Der Oberflächenkondensator 41 müsste dann, wie auch der siebte Wärmeübertrager 39, durch externe Kühlung versorgt werden.

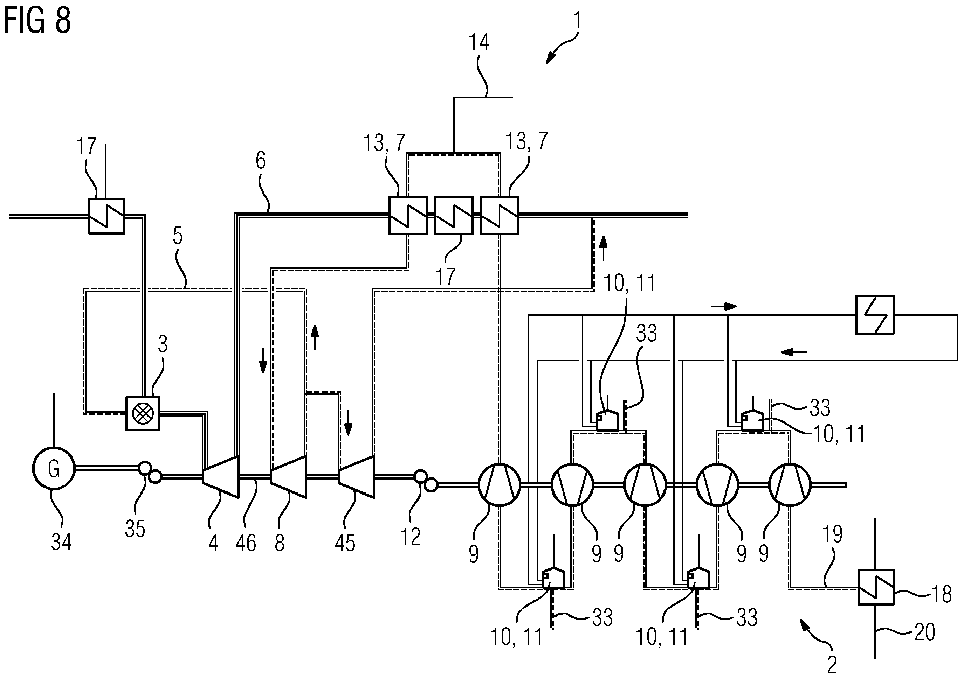

Schließlich zeigt Figur 8 eine Ausführungsform der Erfindung mit einem zweiten Expander, der auf derselben Achse 46 wie der erste Expander 8 angeordnet ist und eingangsseitig mit der Verdichterluftleitung 5 an einer Position hinter dem ersten Expander 8 verbunden ist und ausgangsseitig in die Abgasleitung 6 mündet. Die Anordnung auf einer Achse 46 ist nicht zwingend. Der zweite Expander kann auch auf einer eigenen Achse sitzen, welche in das Getriebe eingebunden ist.

Die Schaltung der Expander 8, 45 ist als Reihenschaltung konzipiert, d.h. der zweite Expander 45 ist nicht parallel sondern in Reihe hinter den ersten Expander 8 geschaltet.

Außerdem ist der zweite Expander, wie auch der erste Expander 8, via Getriebe an den Verdichter 2 angebunden.

## Patentansprüche

1. Kraftwerksanlage (1) mit einem Verdichter (2), einer Brennkammer (3) und einer Turbine (4), weiter umfassend eine Verdichterluftleitung (5), die den Verdichter (2) mit der Brennkammer (3) verbindet, einen in die Verdichterluftleitung (5) geschalteten ersten Wärmeübertrager (7) und einen ersten Expander (8), der zwischen erstem Wärmeübertrager (7) und Brennkammer (3) in der Verdichterluftleitung (5) angeordnet ist, **dadurch gekennzeichnet, dass** der erste Wärmeübertrager (7) ferner in eine von der Turbine (4) abzweigende Abgasleitung (6) geschaltet ist und dass der erste Expander (8) und der Verdichter (2) auf einer gemeinsamen Welle angeordnet sind.

2. Kraftwerksanlage (1) nach Anspruch 1, wobei der Verdichter (2) ein mehrstufig zwischengekühlter Verdichter (2) ist, bei dem zwischen Verdichterstufen (9) zweite Wärmeübertrager (10) als Verdichterzwischenkühlung (11) angeordnet sind.

3. Kraftwerksanlage (1) nach einem der vorhergehenden Ansprüche, wobei der erste Wärmeübertrager (7) zwei Wärmeübertragermodule (13) umfasst, die beide hintereinander jeweils in Verdichterluftleitung (5) und Abgasleitung (6) angeordnet sind, wobei zwischen den Wärmeübertragermodulen (12) eine Wassereinspritzung (14) in der Verdichterluftleitung (5) angeordnet ist.

4. Kraftwerksanlage (1) nach Anspruch 2, wobei die zweiten Wärmeübertrager (10) in einen Fernwärmekreislauf (15) geschaltet sind.

5. Kraftwerksanlage (1) nach Anspruch 3, wobei für eine Brennstoffvorwärmung zwischen den Wärmeübertragermodulen (13) ein dritter Wärmeübertrager (17) in der Abgasleitung (6) angeordnet ist.

6. Kraftwerksanlage (1) nach einem der vorhergehenden Ansprüche, wobei ein vierter Wärmeübertrager (18) in einer Luftzuleitung (19) zum Verdichter (2) angeordnet ist und in einen Kühlkreislauf (20) der Kraftwerksanlage (1) geschaltet ist.

7. Kraftwerksanlage (1) nach einem der Ansprüche 1 bis 3, weiter umfassend eine thermisch angetriebene Kältemaschine (21), die mit ihrer Kälteausgangsseite (25) mit einem Zulauf (26) zumindest eines Teils der Verdichterzwischenkühlung (11) verbunden ist.

8. Kraftwerksanlage (1) nach Anspruch 7, wobei die Kältemaschine (21) mindestens eine Dampfstrahldüse (27) umfasst.

9. Kraftwerksanlage (1) nach Anspruch 8, wobei die Kältemaschine (21) zwei Dampfstrahldüsen (27) umfasst, deren Gemischstromauslässe (28) zusammengeführt sind, und die so miteinander verschaltet sind, dass Entspanner (29) den jeweiligen Sauganschlüssen (30) der Dampfstrahldüsen (27) vorgeschaltet sind und ein Wasserauslass (31) des einen Entspanners (29) mit einem Wassereinlass (32) des anderen Entspanners (29) verbunden ist.

10. Kraftwerksanlage (1) nach einem der Ansprüche 7 bis 9, wobei ein achter Wärmeübertrager (42) in Strömungsrichtung eines Abgases nach den Wärmeübertragermodulen (13) des ersten Wärmeübertragers (7) in die Abgasleitung (6) geschaltet ist und eingangsseitig in den Rücklauf (24) der Verdichterzwischenkühlung (11) und Ausgangsseitig in einen der Entspanner (29) geschaltet ist.

11. Kraftwerksanlage nach einem der Ansprüche 7 bis 9, wobei ein achter Wärmeübertrager (42) zwischen die Wärmeübertragermodule (13) des ersten Wärmeübertragers (7) in die Abgasleitung (6) geschaltet ist und eingangsseitig in den Rücklauf (24) der Verdichterzwischenkühlung (11) und einen Rücklauf des Entspanners (29), in den er auch ausgangsseitig geschaltet ist.

12. Kraftwerksanlage nach einem der Ansprüche 1 bis 3, wobei ein zweiter Expander (45) stromab des ersten Expanders (8) angeordnet ist und eingangsseitig mit der Verdichterluftleitung (5) an einer Position hinter dem ersten Expander (8) verbunden ist und ausgangsseitig in die Abgasleitung (6) mündet.

13. Verfahren zum Betreiben einer Kraftwerksanlage (1), nach Anspruch 1 mit einem Verdichter (2), einer Brennkammer (3) und einer Turbine (4), wobei ein Austrittsdruck des Verdichters (2) höher gewählt wird, als ein erforderlicher Turbineneintrittsdruck, wobei ferner die Verdichterluft in einem Wärmetausch auf eine materialtechnisch maximal zulässige Austrittstemperatur vorgewärmt wird, bevor sie vor der Verbrennung expandiert wird, **dadurch gekennzeichnet, dass** die Verdichterluft in einem Wärmetausch mit einem Abgas der Kraftwerksanlage (1) vorgewärmt wird und das Expandieren der Verdichterluft vor der Verbrennung zum Antrieb des Verdichters genutzt wird.

14. Verfahren nach Anspruch 13, wobei die Verdichterluft durch Expansion auf ein Turbinendruckniveau und eine für die Brennkammer (3) maximal zulässige Temperatur abgesenkt wird.

15. Verfahren nach einem der Ansprüche 13 bis 14, wobei Abwärme vom Abgas und aus der Verdichterzwischenkühlung (11) zum Antrieb einer wärmenutzenden Kältemaschine (21) zwecks verbesserter Zwischenkühlung des Verdichters (2) genutzt wird.

16. Verfahren nach Anspruch 15, wobei Wasser im Wärmetausch mit Abgas und verdichteter Luft erwärmt und anschließend zumindest teilweise verdampft wird und weiterhin Wasser dadurch gekühlt wird, dass mindestens einem Entspanner, in dem erwärmtes Wasser verdampft wird, mindestens eine Dampfstrahldüse zum Absaugen des Dampfes zugeschaltet ist, wobei das bei der Verdampfung gekühlte Wasser zumindest einem Teil einer Verdichterzwischenkühlung zugeführt wird.

## Claims

1. Power plant (1) having a compressor (2), a combustion chamber (3) and a turbine (4), further comprising a compressor air line (5) which connects the compressor (2) to the combustion chamber (3), a first heat exchanger (7) which is connected into the compressor air line (5), and a first expander (8) which is arranged in the compressor air line (5) between the first heat exchanger (7) and the combustion chamber (3), **characterized in that** the first heat exchanger (7) is further connected into an exhaust line (6) which branches from the turbine (4), and **in that** the first expander (8) and the compressor (2) are arranged on a common shaft.

2. Power plant (1) according to Claim 1, wherein the compressor (2) is a multi-stage intercooled compressor (2), in which second heat exchangers (10) are arranged as compressor intercooling (11) between compressor stages (9) .

3. Power plant (1) according to one of the preceding claims, wherein the first heat exchanger (7) comprises two heat exchanger modules (13), which are both arranged one behind the other in each case in the compressor air line (5) and the exhaust line (6), wherein a water injection (14) is arranged in the compressor air line (5) between the heat exchanger modules (12).

4. Power plant (1) according to Claim 2, wherein the second heat exchangers (10) are connected into a district heating circuit (15).

5. Power plant (1) according to Claim 3, wherein a third heat exchanger (17) is arranged in the exhaust line (6) between the heat exchanger modules (13), for preheating fuel.

6. Power plant (1) according to one of the preceding claims, wherein a fourth heat exchanger (18) is arranged in an air supply line (19) to the compressor (2) and is connected into a cooling circuit (20) of the power plant (1) .

7. Power plant (1) according to one of Claims 1 to 3, further comprising a thermally driven chiller (21) which is connected on its cold output side (25) to an inlet (26) of at least part of the compressor intercooling (11) .

8. Power plant (1) according to Claim 7, wherein the chiller (21) comprises at least one steam jet nozzle (27).

9. Power plant (1) according to Claim 8, wherein the chiller (21) comprises two steam jet nozzles (27), the mixed stream outlets (28) of which are brought together, and which are connected to one another in such a manner that flash evaporators (29) are arranged upstream of the respective suction connections (30) of the steam jet nozzles (27), and a water outlet (31) of the one flash evaporator (29) is connected to a water inlet (32) of the other flash evaporator (29).

10. Power plant (1) according to one of Claims 7 to 9, wherein an eighth heat exchanger (42) is connected into the exhaust line (6) downstream of the heat exchanger modules (13) of the first heat exchanger (7) in the direction of flow of an exhaust gas and is connected on the input side into the return line (24) of the compressor intercooling (11) and on the output side into one of the flash evaporators (29).

11. Power plant according to one of Claims 7 to 9, wherein an eighth heat exchanger (42) is connected into the exhaust line (6) between the heat exchanger modules (13) of the first heat exchanger (7) and is connected on the input side into the return line (24) of the compressor intercooling (11) and into a return line of the flash evaporator (29), into which it is also connected on the output side.

12. Power plant according to one of Claims 1 to 3, wherein a second expander (45) is arranged downstream of the first expander (8) and is connected on the input side to the compressor air line (5) at a position downstream of the first expander (8) and opens on the output side into the exhaust line (6).

13. Method for operating a power plant (1) according to Claim 1 having a compressor (2), a combustion chamber (3) and a turbine (4), wherein an outlet pressure of the compressor (2) is chosen to be higher than a required turbine inlet pressure, wherein, further, the compressor air is preheated in a heat exchange to a maximum permissible outlet temperature in terms of materials technology, before it is expanded prior to the combustion, **characterized in that** the compressor air is preheated in a heat exchange with an exhaust gas of the power plant (1), and the expansion of the compressor air prior to the combustion is utilized for driving the compressor.

14. Method according to Claim 13, wherein the compressor air is lowered by expansion to a turbine pressure level and a maximum permissible temperature for the combustion chamber (3).

15. Method according to one of Claims 13 to 14, wherein waste heat from the exhaust gas and from the compressor intercooling (11) is utilized for driving a chiller (21) that utilizes heat, for the purpose of improved intercooling of the compressor (2).

16. Method according to Claim 15, wherein water is heated in heat exchange with exhaust gas and compressed air and is then evaporated at least partially, and water is further cooled in that there is connected to at least one flash evaporator, in which heated water is evaporated, at least one steam jet nozzle for withdrawing the steam by suction, wherein the water cooled during the evaporation is fed at least to part of a compressor intercooling.

## Revendications

1. Centrale (1) électrique comprenant un compresseur (2), une chambre de combustion (3) et une turbine (4), comprenant en outre un conduit (5) pour de l'air du compresseur, qui met le compresseur (2) en communication avec la chambre de combustion (3), un premier échangeur de chaleur (7) monté dans le conduit (5) pour de l'air du compresseur et un premier dispositif (8) d'expansion, qui est monté entre le premier échangeur de chaleur (7) et la chambre de combustion (3) dans le conduit (5) pour de l'air du compresseur, **caractérisé en ce que** le premier échangeur de chaleur (7) est monté en outre dans un conduit (6) pour de l'effluent gazeux partant de la turbine (4) et **en ce que** le premier dispositif (8) d'expansion et le compresseur (2) sont montés sur un arbre commun.

2. Centrale (1) électrique suivant la revendication 1, dans laquelle le compresseur (2) est un compresseur (2) à refroidissement intermédiaire à plusieurs étages, dans lequel des deuxièmes échangeurs de chaleur (10) sont montés comme refroidissement (11) intermédiaire de compresseur entre des étages (9) de compresseur.

3. Centrale (1) électrique suivant l'une des revendications précédentes, dans laquelle le premier échangeur de chaleur (7) comprend deux modules (13) d'échangeur de chaleur, qui sont montés tous deux l'un derrière l'autre respectivement dans le conduit (5) pour de l'air du compresseur et dans le conduit (6) pour l'effluent gazeux, une pulvérisation (14) d'eau dans le conduit (5) pour de l'air du compresseur étant disposée entre les deux modules (12) d'échangeur de chaleur.

4. Centrale (1) électrique suivant la revendication 2, dans laquelle les deuxièmes échangeurs de chaleur (10) sont montés dans un circuit (15) de chaleur à grande distance.

5. Centrale (1) électrique suivant la revendication 3, dans laquelle un troisième échangeur de chaleur (17) est monté dans le conduit (6) pour l'effluent gazeux pour un préchauffage de combustible entre les modules (13) d'échangeur de chaleur.

6. Centrale (1) électrique suivant l'une des revendications précédentes, dans laquelle un quatrième échangeur de chaleur (18) est monté dans un conduit (19) d'amenée d'air au compresseur (2) et est monté dans un circuit (20) de refroidissement de la centrale (1) électrique.

7. Centrale (1) électrique suivant l'une des revendications 1 à 3, comprenant en outre une machine (21) frigorifique, qui est entraînée thermiquement et qui communique par son côté (25) de sortie du froid avec une arrivée (26) au moins d'une partie du refroidissement (11) intermédiaire du compresseur.

8. Centrale (1) électrique suivant la revendication 7, dans laquelle la machine (21) frigorifique comprend au moins une buse (27) de jet de vapeur.

9. Centrale (1) électrique suivant la revendication 8, dans laquelle la machine (21) frigorifique comprend deux buses (27) de jet de vapeur, dont les sorties (28) de courant mélangées sont rassemblées et qui sont montées l'une avec l'autre, de manière à ce que des ballons (29) de détente soient montés en avant des raccords (30) d'aspiration respectifs des buses (27) de jet de vapeur et de manière à ce qu'une sortie (31) d'eau de l'un des ballons (29) de détente communique avec une entrée (32) d'eau de l'autre ballon (29) de détente.

10. Centrale (1) électrique suivant l'une des revendications 7 à 9, dans laquelle un huitième échangeur de chaleur (42) est monté dans le sens du courant d'un effluent gazeux après les modules (13) d'échangeur de chaleur du premier échangeur de chaleur (7) dans le conduit (6) pour un effluent gazeux, et est monté du côté de l'entrée dans le retour (24) du refroidissement (11) intermédiaire du compresseur et du côté de la sortie dans l'un des ballons (29) de détente.

11. Centrale électrique suivant l'une des revendications 7 à 9, dans laquelle un huitième échangeur de chaleur (42) est monté entre les modules (13) d'échangeur de chaleur du premier échangeur de chaleur (7) dans le conduit (6) pour un effluent gazeux et du côté de l'entrée dans le retour (24) du refroidissement (11) intermédiaire du compresseur et dans un retour du ballon (29) de détente, dans lequel il est monté aussi du côté de la sortie.

12. Centrale électrique suivant l'une des revendications 1 à 3, dans laquelle un deuxième dispositif (45) d'expansion est monté en aval du premier dispositif (8) d'expansion et communique du côté de l'entrée avec le conduit (5) pour de l'air du compresseur en une position derrière le premier dispositif (8) d'expansion et débouche du côté de la sortie dans le conduit (6) pour un effluent gazeux.

13. Procédé pour faire fonctionner une centrale (1) électrique suivant la revendication 1, comprenant un compresseur (2), une chambre de combustion (3) et une turbine (4), dans lequel on choisit une pression de sortie du compresseur (2) plus haute qu'une pression d'entrée nécessaire à la turbine, dans lequel en outre on préchauffe l'air du compresseur par un échange de chaleur à une température de sortie admissible au maximum en technique des matériaux, avant de le détendre avant la combustion, **caractérisé en ce que** l'on préchauffe l'air du compresseur en échange de chaleur avec un effluent gazeux de la centrale (1) électrique et on utilise la détente de l'air du compresseur avant la combustion, pour l'entraînement du compresseur.

14. Procédé suivant la revendication 13, dans lequel on met l'air du compresseur par détente à un niveau de pression de la turbine et on en abaisse la température à une température admissible au maximum pour la chambre de combustion (3).

15. Procédé suivant l'une des revendications 13 à 14, dans lequel on utilise de la chaleur perdue de l'effluent gazeux et du refroidissement (11) intermédiaire du compresseur pour l'entraînement de la machine (21) frigorifique utilisant de la chaleur en vue d'améliorer le refroidissement intermédiaire du compresseur (2).

16. Procédé suivant la revendication 15, dans lequel on réchauffe de l'eau en échange de chaleur avec l'effluent gazeux et de l'air comprimé et on l'évapore ensuite au moins en partie et on refroidit en outre de l'eau par le fait qu'on branche sur au moins un ballon de détente, dans lequel on évapore de l'eau chauffée, au moins une buse à jet de vapeur pour l'aspiration de la vapeur, dans lequel lors de l'évaporation on envoie de l'eau refroidie au moins à une partie d'un refroidissement intermédiaire du compresseur.
